# EUROPÄISCHE PATENTANMELDUNG

(11) **EP 1 199 691 A2**
(43) Veröffentlichungstag der Anmeldung: **24.04.2002**
(21) Anmeldenummer: 01100361.3
(22) Anmeldetag: 05.01.2001
(51) Int. Cl.: G07F 19/00, G07F 7/10

(54) **Identifikationsautomat und Identifikationsverfahren**

(30) Priorität: 02.10.2000 EP 00121582; 27.10.2000 EP 00123516; 29.11.2000 EP 00126074; 18.12.2000 EP 00127684
(71) Anmelder: ROTAS Remote Online Transaction Authoristion Systems GmbH, 41179 Mönchengladbach (DE)
(72) Erfinder: Stoffelsma, Bouke Christiaan, 41061 Mönchengladbach (DE)
(74) Vertreter: Patentanwälte Lippert, Stachow, Schmidt & Partner

(57) **Zusammenfassung**

Um einen Identifikationsautomaten (A) für die Identifikation eines Benutzers (C), wobei der Benutzer (C) dem Identifikationsautomaten (A) eine Kontoverbindung übermittelt, und ein Identifikationsverfahren zur Identifikation eines Benutzers (C) für eine sicherheitsrelevante Anwendung, bei der der Benutzer (C) einer Identifikationsinstanz eine Kontoverbindung übermittelt, derart weiterzuentwickeln, dass die Identifikation eines Benutzers sicherer durchführbar ist, wird erfindungsgemäß vorgeschlagen, dass der Identifikationsautomat ein Passwort errechnet und an die Kontoverbindung des Benutzers (C) übermittelt.

## Beschreibung

Die Erfindung betrifft einen Identifikationsautomaten für die Identifikation einer Instanz, wobei die Instanz dem Identifikationsautomaten eine Kontoverbindung übermittelt.

Die Instanz kann eine natürliche oder juristische Person sein, z.B. ein Benutzer, eine geschlossene Benutzergruppe einer Firma oder ein Theater. Denkbar ist auch ein Prozess, der bsp. in einem Rechner abläuft.

Es ist bekannt, dass ein Benutzer dem Identifikationsautomaten eine Kontoverbindung auf verschiedenen Übertragungsmedien übermittelt und dieser die Daten des Benutzers auf Plausibilität prüft. Üblicherweise erfolgt diese Prüfung aufgrund von Listen, die in dem Identifikationsautomaten gespeichert sind oder in einem weiteren Speicher, wie z.B. bei einer Bank, abgelegt sind, und auf die der Identifikationsautomat im Rahmen der Plausibilitätsprüfung zugreifen kann. Der Identifikationsautomat kann demnach bei einem Drittanbieter oder bei einer Bank direkt installiert sein.

Die Übermittlung der Kontoverbindung kann sowohl mündlich direkt via Telefon oder über datenverarbeitungstechnische Einrichtungen erfolgen.

Die bekannten Automaten sind mit dem Nachteil behaftet, dass sie ausschließlich eine Plausibilitätsprüfung, also die allgemeine Existenz der angegebenen Bankverbindung prüfen, nicht aber, ob der Benutzer zugangsberechtigt für das benannte Konto ist. So könnte ein Benutzer beispielsweise eine ihm zugänglich gewordene fremde Kontoverbindung als eigene angeben, die im Rahmen der Plausibilitätsprüfung als existent bestätigt wird. Beispielsweise führen zahlreiche Unternehmen auf ihren Briefbögen die Bankverbindungen auf. Insbesondere im e-commerce-Bereich, in dem die persönliche Verifizierung ausscheidet, werden zunehmend Kontoverbindungen angegeben, die dem jeweiligen Benutzer tatsächlich nicht zuzuordnen sind, die aber aufgrund der positiv durchgeführten Plausibilitätsprüfung für eine Identifikation genügen und im Weiteren zu einer falschen Abrechnung führen.

Die aus dem Stand der Technik bekannten Identifikationsautomaten liefern somit keine für den e-commerce-Bereich ausreichend sichere Identifikation. Aus diesem Grund wird die Zahlung per Kreditkarte oder Lastschriftverfahren im e-commerce-Bereich als unsicher angesehen und behindert die Fortentwicklung des Handels im Internet.

Es ist Aufgabe der vorliegenden Erfindung, einen eingangs genannten Identifikationsautomaten derartig weiterzuentwikkeln, dass die Identifikation eines Benutzers sicherer durchführbar ist.

Erfindungsgemäß wird diese Aufgabe dadurch gelöst, dass der Identifikationsautomat ein Passwort errechnet und dieses an die durch die Kontoverbindung dargestellte Adresse übermittelt. Unter Passwort wird eine geheime Information verstanden, die nur einer beschränkten Benutzergruppe kenntlich ist; die Benutzergruppe kann eine oder mehrere Personen umfassen.

Vorzugsweise besteht das Passwort aus einer numerischen oder alphanumerischen Zeichenkette. Die Länge der Zeichenkette bemisst sich nach dem erforderlichen Sicherheitsgrad, wobei bereits zwei alphanumerische Zeichen eine für den Bankenbebereich ausreichende Sicherheit darstellen können. Die aus dem Stand der Technik bekannte Plausibilitätsprüfung wird somit um die Erzeugung eines Passworts erweitert, welches an die Kontoverbindung übermittelt wird und nur von dem für dieses Konto zugangsberechtigten Benutzer abrufbar ist, so dass auch nur diesem das Passwort zugänglich ist. Die Zugangsberechtigung muss nicht auf eine einzelne Person beschränkt sein, sondern kann beispielsweise für eine Gruppe von Benutzern bestehen, wie z.B. bei mehreren für ein Geschäftskonto zugangsberechtigten Personen in einem Unternehmen. Für die Übertragung des Passworts vom Bankensystem zum Benutzer wird dabei auf einen existierenden, abgesicherten Übertragungsweg zurückgegriffen, für den die Zugangsberechtigung des Benutzers bereits geprüft wurde.

Die Übermittlung des Passworts erfolgt vorzugsweise als Verwendungszweck in einer regulären Banktransaktion. Die Banktransaktion kann als Lastschrift oder als Gutschrift (z.B. als Überweisung) erfolgen. Zumindest muss das Passwort auf einem Kontoauszug oder einem vergleichbar sicheren Medium darstellbar sein.

Die Übermittlung der Kontoverbindung vom Benutzer an den Identifikationsautomaten erfolgt vorzugsweise über die Datenverarbeitungstechnik, insbesondere über das Internet. Die Übermittlung der Banktransaktion mit dem Passwort an die in der Kontoverbindung dargestellten Adresse erfolgt wahlweise manuell direkt, per Fernsprecher oder vorzugsweise ebenfalls datenverarbeitungstechnisch. Hierzu werden dann die bekannten Protokolle HBCI, DTA oder sonstige für den beleglosen Datenträgeraustausch geeignete Protokolle verwendet.

Der erfindungsgemäße Identifikationsautomat ist zudem für den mobilen commerce (m-Commerce) einsetzbar. Bei diesem Anwendungsfall übermittelt der Benutzer mit einem Anruf von seinem Mobiltelefon, dessen Rufnummer per CLI (calling-line-identification) bestimmbar ist, seine Kontoverbindung an den Identifikationsautomaten. Anstelle eines Anrufs kann der Benutzer auch eine SMS mit seiner Kontoverbindung an den Identifikationsautomaten senden. Der Identifikationsautomat übermittelt sodann das Passwort an die angegebene Kontoverbindung. Das Passwort ist in diesem Fall eine geheime Telefonnummer, die der Benutzer zur Freischaltung (Identifikation) anrufen muss. Vorzugsweise handelt es sich um eine oder mehrere geheime Telefonnummern, die dem Identifikationsautomaten als reservierter Nummernkreis zugeordnet sind. Wenn der Benutzer eine solche geheime Telefonnummer des Identifikationsautomaten anruft, kann der Identifikationsautomat durch die Zuordnung der Telefonnummer des anrufenden Mobiltelefons zu der geheimen Telefonnummer die Identifikation des Benutzers und dessen Zugriffsberechtigung auf die angegebene Kontoverbindung überprüfen und bei positivem Ergebnis den Benutzer freischalten bzw. in einer Registrierungsdatenbank aufnehmen.

Diese Anwendungsmöglichkeit ist naturgemäß nicht auf Mobiltelefone beschränkt, sondern auch mit einem Festanschluss realisierbar; entscheidend ist die Zuordnung einer Bankverbindung zu der Telefonnummer des anrufenden Benutzers.

Um ein mögliches Abhören der Übertragung der Kontoverbindung von dem Kunden zu dem Identifikationsautomaten zu vermeiden, erfolgt die Übermittlung der Kontoverbindung an den Identifikationsautomaten vorzugsweise verschlüsselt mit einem öffentlichen Schlüssel des Identifikationsautomaten. Bei diesem asymmetrischen Verschlüsselungsverfahren kann jeder Benutzer seine Kontoinformationen verschlüsseln, aber nur der Identifikationsautomat kann die Kontoverbindung entschlüsseln. Ein bekanntes asymmetrisches Verschlüsselungsverfahren ist RSA (Rivest Shamir Adleman). Der Identifikationsautomat erzeugt in dieser Ausgestaltung einen öffentlichen und einen privaten Schlüssel, von denen er nur den öffentlichen Schlüssel den Benutzern zur Verfügung stellt.

Üblicherweise ist das Passwort zur Identifikation für mindestens eine Transaktion verwendbar. Als Transaktion ist jede Aktion zwischen zwei Instanzen zu verstehen, z.B. Abwickeln eines Kaufs, Abruf von Informationen, Zugang zu proprietären Daten, Ausführen einer Buchung, Besuch einer Kulturveranstaltung, usw. Die Identifikationen können über den erfindungsgemäßen Identifikationsautomaten durchgeführt werden oder direkt mit einem aus dem Stand der Technik bekannten Identifikationsautomaten, der lediglich die Eingabe eines Passworts benötigt, beispielsweise ein RADIUS-System. Ein Internet-Serviceprovider kann damit sicherstellen, dass nur ein eindeutig identifizierter Kunde seine Dienstleistungen in Anspruch nehmen kann.

Bei einer alternativen Weiterentwicklung kann der Internet-Serviceprovider die Nutzungsentgelte für die angefragten Dienstleistungen über die Kontoverbindung des anfragenden Benutzers abbuchen. Dies kann er durch Betreiben eines erfindungsgemäßen Identifikationsautomaten realisieren, der die Zuordnung von Passwort zur Kontoverbindung ermöglicht, oder als Dienstleistung von einem Betreiber eines erfindungsgemäßen Identifikationsautomaten durchführen lassen. Beispielsweise kann es sich um verschiedene Server im Internet handeln.

Das Passwort kann zeitlich beschränkt gültig oder nur für eine vorbestimmte Transaktionsanzahl verwendbar sein.

Das Passwort kann verschiedenste Formate aufweisen. In der einfachsten Ausgestaltung dient das Passwort nur der eindeutigen Identifikation des Benutzers gegenüber einer anderen Instanz (Identifikationsautomat, Informationsanbieter, Internet-Service-Provider, Theater u.ä.); es erfüllt damit die Funktion eines Zertifikats zum Nachweis der Identität einer Instanz oder eines Benutzers. Damit können mit dem Passwort weitere Benutzerinformationen (Rufnummer eines von dem Benutzer angegebenen Telefons oder Mobiltelefons, seine Passnummer, seine Sozialversicherungsnummer, sein Fingerabdruck, weitere biometrische Merkmale eines Benutzers, ein öffentlicher Schlüssel usw.) zertifiziert übermittelt werden. Auch die Übertragung eines weiteren Passworts, das z.B. einem höheren Sicherheitsniveau genügt oder einem anderen als dem ersten Benutzerkreis zugänglich ist, ist denkbar.

Der besondere Reiz liegt darin, dass dem Identifikationsautomaten nur die vom Benutzer übermittelten Informationen bekannt sind und keine weitergehenden; diese Informationen ermöglichen aber in jedem Fall die Abrechnung mit dem Benutzer durch den Identifikationsautomaten. Sofern sich die den Identifikationsautomaten betreibende Instanz von der Instanz unterscheidet, für die sich ein Benutzer legitimieren will, genießt der Benutzer eine Anonymität, die der Bargeldzahlung gleich steht.

Vorzugsweise ist das Passwort der Schlüssel für ein symmetrisches Verschlüsselungsverfahren. Diese Verschlüsselungsverfahren sind allgemein bekannt; ein solches bekannt eingesetztes Verschlüsselungsverfahren ist DES (Data Encryption Standard), welches einen 56-bit langen Schlüssel verwendet. Zwischen Identifikationsautomaten und Benutzer ist nun eine gesicherte Kommunikation möglich, da das Passwort beiden Seiten bekannt ist. In gleicher Weise ist eine Kommunikation zwischen dem Benutzer und weiteren Informationsanbietern, denen das Passwort/der Schlüssel mitgeteilt wird oder der Rechenweg für die Erzeugung des Passworts bekannt ist, möglich.

Ein besonders hohes Maß an Sicherheit bietet ein Schlüssel, der zur Entschlüsselung eines von dem Benutzer verwendeten öffentlichen Schlüssels (asymmetrisches Verschlüsselungsverfahren) einsetzbar ist. Dieser öffentliche Schlüssel kann entweder von dem Benutzer selbst erzeugt oder diesem von einer weiteren Instanz übermittelt werden, z.B. auf einer SmartCard. Da der private Schlüssel des Benutzers bei diesem verbleibt, kann in diesem Fall der Identifikationsautomat die Identität des Benutzers mit dem öffentlichen Schlüssel dauerhaft überprüfen mit üblichen Challenge-response Verfahren, indem er den Benutzer auffordert, eine Information mit dem ausschließlich dem Benutzer bekannten privaten Schlüssel zu verschlüsseln, der dann mit dem dem Benutzer zugeordneten öffentlichen Schlüssel entschlüsselt werden kann. Die Übereinstimmung der vom Identifikationsautomaten versandten und empfangenen Informationen stellt die Identität des Benutzers sicher.

Für den Benutzer ist eine besonders hohe Sicherheitsstufe realisierbar, wenn der öffentliche Schlüssel einem privaten Schlüssel des Benutzers zugeordnet ist, der in einer Verschlüsselungsvorrichtung unauslesbar enthalten ist. Die Verschlüsselungsvorrichtung für den privaten Schlüssel kann beispielsweise eine Geldkarte, eine SmartCard oder ein Dongle sein. Sie kann auch in einem Mobiltelefon oder dergleichen integriert sein.

Die Erfindung betrifft zudem ein Identifikationsverfahren zur Identifikation einer Instanz, bei dem die Instanz einer Identifikationsinstanz zumindest eine eine Kontoverbindung enthaltende Information der Instanz übermittelt.

Bei Zugrundelegung der eingangs genannten Nachteile liegt der Erfindung die Aufgabe zugrunde, ein solches Identifikationsverfahren derart weiterzuentwickeln, dass die Identifikation der Instanz sicherer durchführbar ist.

In einer ersten Lösung wird vorgeschlagen, dass von der Identifikationsinstanz zunächst ein Passwort ermittelt oder erzeugt wird, dass dann an die Kontoverbindung der Instanz übermittelt wird.

Eine zweite Lösung sieht vor, dass die zu identifizierende erste Instanz zunächst ein Passwort an die Identifikationsinstanz übermittelt, die dieses Passwort für die Identifikation der ersten Instanz für noch folgende Identifikationen erfasst.

Schließlich betrifft die Erfindung ein Identifikationsverfahren zur Identifikation einer zu identifizierenden Instanz, bei dem ein Bankensystem einer Identifikationsinstanz zumindest eine eine Kontoverbindung enthaltende Information der Instanz übermittelt. Auch dieser Erfindung liegt die zuvor zitierte Aufgabe zugrunde.

Zur Lösung dieser Aufgabe wird vorgeschlagen, dass die Identifikationsinstanz ein Passwort erzeugt oder ermittelt und an die Kontoverbindung übermittelt.

Allen Lösungen ist gemein, dass für die Übermittlung der Passwörter ein bereits bestehender und sicherer Informationsweg des Bankensystems verwendbar ist. Naturgemäß hat nur die Zielinstanz - also entweder die Identifikationsinstanz oder die zu identifizierende Instanz - die Zugriffsberechtigung zu der jeweils angegebenen Kontoverbindung, so dass nur die Zielinstanz das Passwort abrufen kann. Die erfindungsgemäßen Verfahren stellen zudem sicher, dass die angegebene Kontonummer existiert. Da auf bereits existierende Kommunikationswege zurückgegriffen wird, ist die Übertragung des Passworts an die Zielinstanz schnell durchführbar.

Die Identifikationsinstanz kann eine natürliche Person sein, welche die Kontoverbindung der Instanz unmittelbar oder per Telefonverbindung entgegennimmt, ein Passwort erzeugt oder z.B. aus einer Tabelle ermittelt und dieses in Form einer Banktransaktion an die von der Instanz oder dem Bankensystem angegebene Kontoverbindung übermittelt. Vorzugsweise ist die Identifikationsinstanz als Automat ausgestaltet, beispielsweise als Server in einem Datennetzwerk.

Ein besonderer Vorteil der Identifikationsverfahren besteht darin, dass mit diesen auch geschlossene Benutzergruppen bzw. LAN/WAN-Benutzer einfach, schnell und kostengünstig identifiziert werden können. Allein über die IP-Adresse können diese Benutzer nicht eindeutig identifiziert werden. So weisen zum Beispiel bestimmte Provider für jede Session dem User eine neue IP-Adresse zu. Zudem können Anonymiser die IP-Adressen abwandeln. Schließlich werden IP-Adressen mehrfach vergeben. Die weitere Alternative der Übermittlung der Kreditkartennummer ist, wie oben dargestellt, unsicher und stellt keine eindeutige Identifikationsmöglichkeit bereit. Demgegenüber ist das erfindungsgemäße Verfahren sicher und kostengünstig, da nur die Kosten einer Banktransaktion für die Identifikationsinstanz anfallen. Im Optimalfall ist die Übermittlung des Passworts an die erste Instanz real-time durchführbar.

Vorzugsweise handelt es sich bei der ersten Instanz um einen Benutzer.

Die Buchung des Passworts auf die angegebene Kontoverbindung kann als Lastschrift oder Gutschrift (z.B. Überweisung) erfolgen.

Insbesondere bei der Durchführung des Identifikationsverfahrens im Datennetzwerk ist es zur Vermeidung von Missbrauch zweckmäßig, dass die Kontoverbindung mit einem öffentlichen Schlüssel der Identifikationsinstanz verschlüsselt übertragen wird, um sicherzustellen, dass nur die Identifikationsinstanz, die den zu dem öffentlichen Schlüssel gehörenden privaten Schlüssel besitzt, die Kontoverbindung lesen kann. Wird die Nachricht beispielsweise an eine falsche Adresse versendet, kann der Empfänger die Kontoinformationen nicht ersehen.

Bei Einsatz des Identifikationsverfahrens im Netzwerk kann in einem weiteren Verfahrensschritt die Nutzungsgebühr für den Abruf proprietärer Daten (content) von der Kontoverbindung abgebucht werden. Die Prüfung des Passworts kann sowohl durch die Identifikationsinstanz als auch durch den das Datenelement bereitstellenden Server erfolgen, dem zuvor das Passwort übermittelt wurde.

Wie zuvor beschrieben, muss das Identifikationsverfahren nicht notwendigerweise von der Instanz initiiert werden. Alternativ kann zum Beispiel das Bankensystem oder die Kundendaten verwaltende Instanz die Kontoverbindung an die Identifikationsinstanz zur Erzeugung von Passwörtern übermitteln, die die Kontoverbindung zusammen mit den Passwörtern zurück an die Bankverbindung übermittelt. Auf diese Weise können Banken und Kundenkonten verwaltende Institute sich im Vorfeld zu der konkreten Anfrage eines Kunden Passwörter generieren lassen, die der Kunde im Bedarfsfall von seinem Kontoauszug ablesen und so proprietäre Informationen abrufen kann, für die das Passwort erforderlich ist.

Bei der Übermittlung des Passworts können diesem weitere Informationen beigefügt werden, die der Verwendung des Passworts zugeordnet sind, z. B. der Name eines Anbieters, der das Passwort akzeptiert, der Ort und der Zeitpunkt einer Veranstaltung, für die Karten mit dem Passwort reserviert wurden, die Bonität des Benutzers oder die Anzahl der Benutzungsmöglichkeiten des Passworts u.ä. Es kann auch vorgesehen sein, dass vor der Übertragung des Passworts zunächst die Bonität des Benutzers geprüft wird.

Besonders geeignet sind die erfindungsgemäßen Verfahren für den Einsatz in sicherheitsrelevanten Anwendungen. Selbstverständlich lassen sich auch bei den erfindungsgemäßen Verfahren die Passwörter für die Einsatzgebiete verwenden, die weiter oben im Zusammenhang mit dem Identifikationsautomaten beschrieben wurden.

Im Falle des Identifikationsverfahrens, bei dem die zu identifizierende Instanz ein Benutzer ist, der ein Mobiltelefon betreibt und durch Übermittlung seiner Kontoverbindung an die Identifikationsinstanz das Verfahren initiiert, kann der Benutzer als Passwort die Nummer seines Mobilfunkttelefons angeben, so dass die Identifikationsinstanz unmittelbar die Kontoverbindung und die Telefonnummer des Mobiltelefons erhält und beispielsweise diese Informationen zur Freischaltung in einer an der Identifationsinstanz vorgesehenen Registrierungsdatenbank aufnehmen kann.

In einer besonders sicheren Weiterentwicklung kann vorgesehen sein, dass das von der Identifikationsinstanz an die angegebene Kontoverbindung übermittelte Passwort nur für die Freischaltung der zu identifizierenden Instanz, insbesondere eines Benutzers eingesetzt wird, nicht aber mehrfach verwendbar ist. Bei dem ersten Verbindungsaufbau zu der Identifikationsinstanz bzw. zu dem Identifikationsautomaten gibt die zu identifizierende Instanz dieses Passwort an und wird unmittelbar aufgefordert, selbständig ein neues Passwort festzulegen, welches zukünftig benutzt wird. Die Erfassung des neuen Passworts kann mit der anfänglichen Erfassung der Kontoverbindung miterfasst und durch Eingabe des von der Identifikationsinstanz übermittelten Passworts freigeschaltet werden. Damit ist sowohl die Identifikation der zu identifizierenden Instanz vollzogen als auch deren Zugriff auf die angegebene Kontoverbindung gewährleistet. Selbstverständlich können damit auch von der zu identifizierenden Instanz beanspruchte Dienste über die Kontoverbindung abgerechnet werden. Dieses neue Passwort kann nunmehr als symmetrischer oder asymmetrischer Schlüssel in der zuvor beschriebenen Weise zur zertifizierten Kommunikation zwischen den verschiedenen Instanzen eingesetzt werden. Wenn die zu identifizierende Instanz einen Benutzer darstellt, kann das neue Passwort einen von dem Benutzer zu bestimmenden Benutzernamen (z.B. ein Username oder Pseudonym) enthalten.

Die Funktionsweise des erfindungsgemäßen Identifikationsautomaten und des Identifikationsverfahrens ist in den Figuren anhand bevorzugter Ausführungsbeispiele veranschaulicht. Es zeigen:
- Fig. 1: eine schematische Darstellung der Funktionsweise eines herkömmlichen Identifikationsautomaten,
- Fig. 2: eine schematische Darstellung der Funktionsweise des erfindungsgemäßen Identifikationsautomaten,
- Fig. 3: eine schematische Darstellung eines erfindungsgemäßen Identifikationsautomaten mit Passwörtern, die auch von anderen, nicht erfindungsgemäß arbeitenden Identifikationsautomaten verwendet werden können,
- Fig. 4: eine schematische Darstellung eines alternativ ablaufenden erfindungsgemäßen Identifikationsverfahrens und
- Fig. 5: eine schematische Darstellung des Ablaufs einer weiteren Alternative des erfindungsgemäßen Identifikationsverfahrens.

In den Figuren ist der Identifikationsautomat mit A, der Benutzer mit C und das Bankensystem mit B gekennzeichnet. Der Identifikationsautomat A bildet die Identifikationsinstanz und der Benutzer C eine zu identifizierende Instanz. Das Bankensystem kann eine oder mehrere Finanzinstitute umfassen oder aus Kundenkonten verwaltenden Instituten bestehen, beispielsweise einem Kaufhaus, einer Fluglinie, einer Telefongesellschaft oder einem Automobilclub. Die übermittelten Informationen sind an den die Instanzen A, B und C verbindenden Pfeilen in hinterlegten Kästchen dargestellt. Die Pfeile kennzeichnen die Richtung des Informationsflusses; die Kommunikationswege zwischen den Instanzen A, B und C sind mit gestrichelten Linien gekennzeichnet.

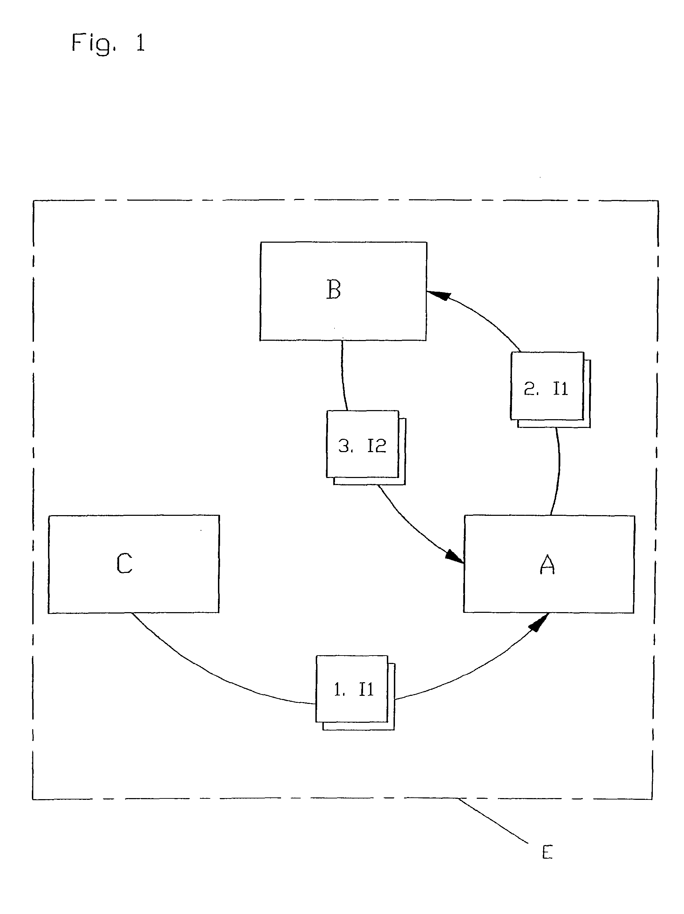

Der in Fig. 1 dargestellte Identifikationsautomat A nach dem Stand der Technik arbeitet wie folgt: Der Kunde C übermittelt dem Identifikationsautomaten A im Schritt 1 eine Kontoverbindung I1, in der Regel bestehend aus den Informationsteilen: Name, Konto-Nummer und Bankleitzahl. Im Falle einer Kreditkarte werden die Kreditkartennummer, der Name und das Verfallsdatum übermittelt. Der Identifikationsautomat leitet diese Informationen in Schritt 2 an das Bankensystem B weiter. Im abschließenden Schritt 3 sendet die Bank B dem Identifikationsautomaten A die Information I2, welche angibt, ob das in I1 spezifizierte Konto existiert. Unter Umständen wird zudem die Bonität des Kontos angegeben. Es wird nicht überprüft, ob der Benutzer C tatsächlich zugangsberechtigt für die angegebene Bankverbindung I1 ist. Die gesamte Kommunikation wird bsp. über das Internet E vollzogen.

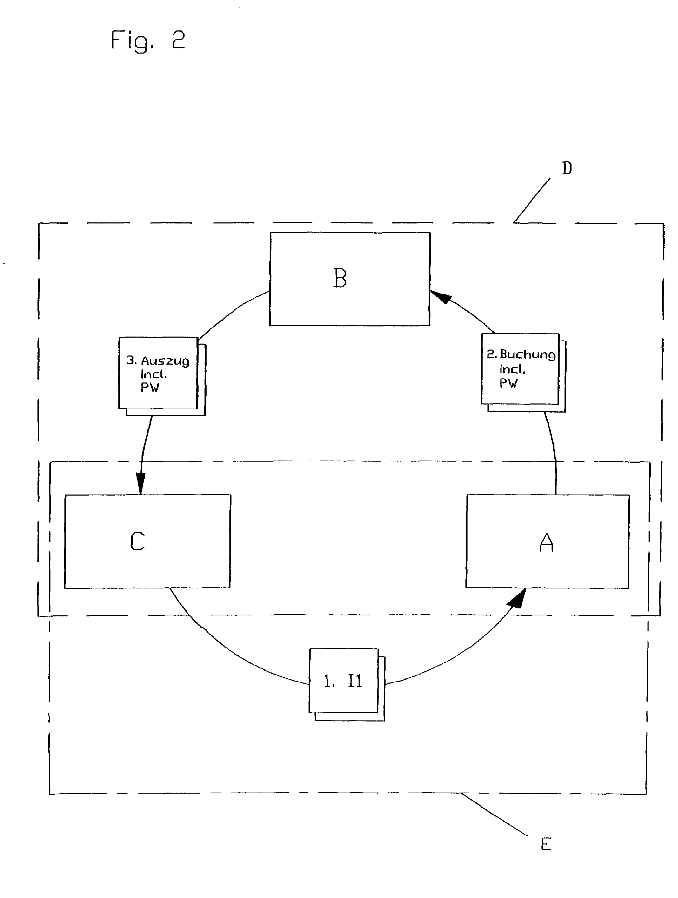

Fig. 2 zeigt dagegen die grundsätzliche Funktionsweise des erfindungsgemäßen Identifikationsautomaten und -verfahrens. Der Kunde C schickt in Schritt 1 wiederum die Information I1 über ein bekanntes Übertragungsmedium, beispielsweise das Internet E, an den Identifikationsautomaten A. Der Identifikationsautomat generiert daraufhin ein Passwort PW und übermittelt in Schritt 2 die Information I1 mit dem Passwort PW in Form einer üblichen Kontotransaktion, insbesondere einer Überweisung, an das Bankensystem B. Bei der Übertragung vom Bankensystem B zu dem Kunden C handelt es sich um einen bereits etablierten Informationsweg D des Bankensystems B, der die Zugriffsberechtigung des Kunden auf die Kontoverbindung sicherstellt. Diese Transaktion kann innerhalb des Bankensystems von einem dem Identifikationsautomaten zugehörigen Bankkonto an ein der I1 entsprechendes Bankkonto übermittelt werden. Im abschließenden dritten Schritt ruft der Benutzer C seinen Kontoauszug einschließlich des Passworts PW von dem Bankensystem B ab. Der Benutzer C erhält das Passwort demnach nur, wenn er tatsächlich die Zugangsberechtigung für das mit Il bezeichnete Konto hat.

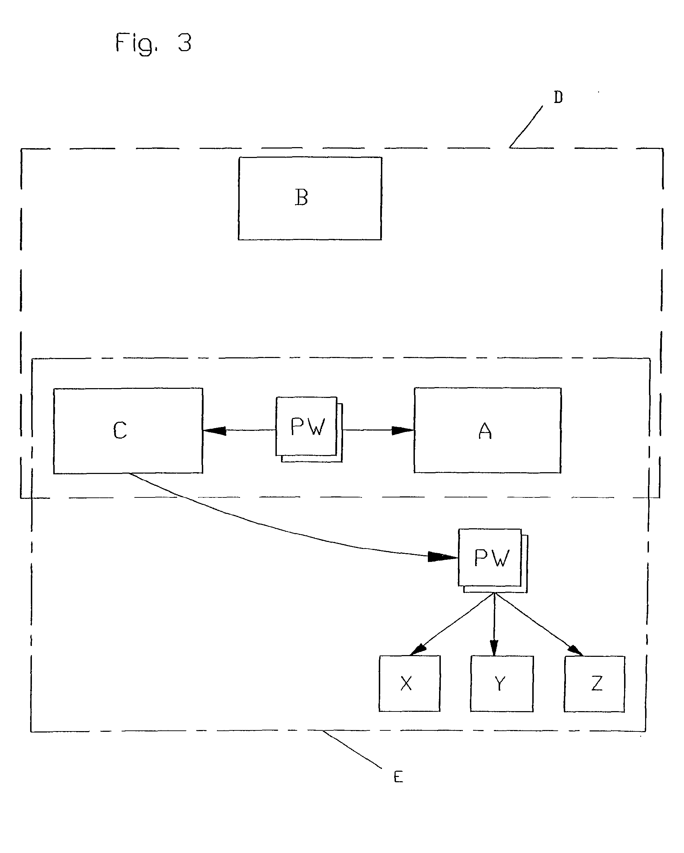

In Fig. 3 ist ein Passwort PW dargestellt, welches sowohl von dem erfindungsgemäßen Identifikationsautomaten A als auch von nicht erfindungsgemäß ausgebildeten Identifikationsautomaten X, Y und Z akzeptiert wird. Der Identifikationsautomat A kann auf diese Weise Passwörter für andere Instanzen generieren, z.B. für einen Internet-Serviceprovider oder einen Informationsanbieter.

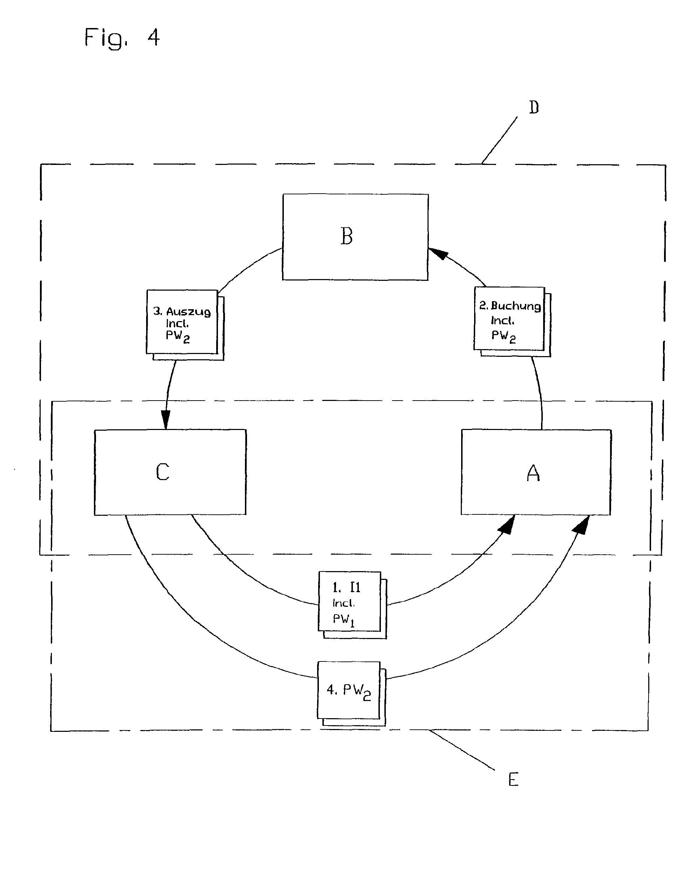

Das in Fig. 4 dargestellte Identifikationsverfahren ist gegenüber den bislang beschriebenen Verfahren dahingehend abgeändert, dass in dem ersten Schritt der Benutzer C die Informationen I1 (Kontonummer und ein zu diesem Konto passender Name) mit einem ersten Passwort PW1 an den Identifikationsautomaten A übermittelt. Der Identifikationsautomat A erzeugt dann ein zweites Passwort PW2 und übermittelt dieses an das Bankensystem B. Dieses zweite Passwort PW2 kann nun von dem Benutzer C abgerufen werden. Für die Identifikation des Benutzers C bei dem Identifikationsautomaten A müssen beide Passwörter PW1 und PW2 vorliegen. Da dem Bankensystem B das erste Passwort PW1 unbekannt ist, wird ein eventueller Missbrauch durch das Bankensystem B zuverlässig ausgeschlossen. Das erste Passwort PW1 kann beispielsweise einen von dem Benutzer gewählten Usernamen oder Pseudonym umfassen.

Das Passwort PW1 ist für eine gesicherte Kommunikation des Benutzers C mit dem Identifikationsautomaten A oder mit dritten Instanzen, denen das Passwort PW1 zuvor mitgeteilt wurde, verwendbar.

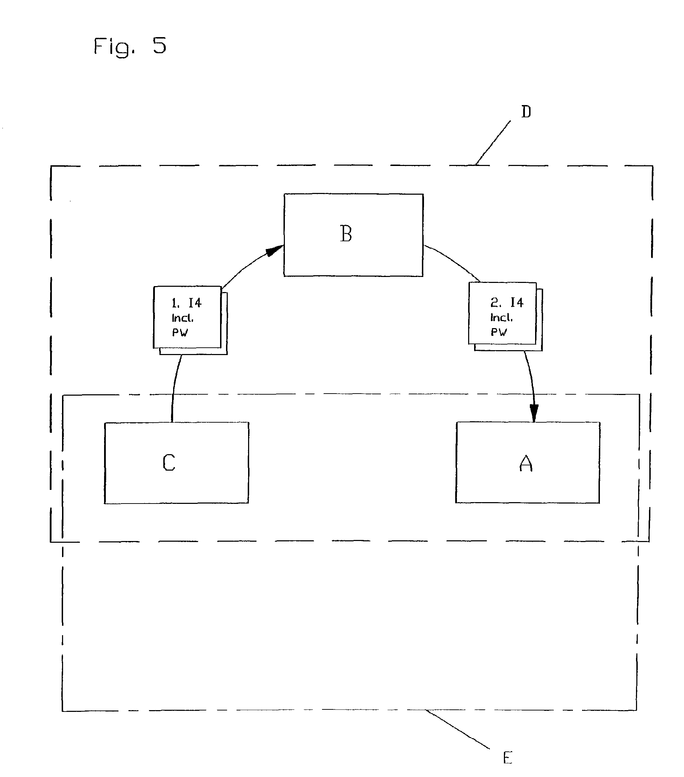

In Fig. 5 ist schließlich ein erfindungsgemäßes Identifikationsverfahren schematisch dargestellt, bei welchem ein Benutzer C ein Passwort PW an eine Kontoverbindung des Identifikationsautomaten A übermittelt. Der Benutzer C tätigt dazu in einem ersten Schritt eine Banküberweisung (elektronisch oder Beleg gebunden) an die Kontoverbindung des Identifikationsautomaten A, die z. B. auf der Homepage des Identifikationsautomaten A angegeben ist. In einem zweiten Schritt ruft der Identifikationsautomat dieses Passwort PW von der Kontoverbindung ab. Das Passwort ist nun für die zuvor beschriebenen Verwendungen zur zertifizierten Kommunikation zwischen dem Benutzer C, dem Identifikationsautomaten A und weiteren Instanzen einsetzbar, denen das Passwort mitgeteilt wird.

Auch bei diesen Weiterbildungen wird für die Übertragung zwischen dem Benutzer C und der Identifikationsinstanz A ein klassischer Informationsweg, beispielsweise das Internet E genutzt, wohingegen für die Übermittlung der Daten von der Identifikationsinstanz A zu und von dem Bankensystem B auf die existierenden und sicheren Kommunikationswege D des Bankensystems B zurückgegriffen wird.

### Bezugszeichenliste

- A: Identifikationsautomat
- B: Bankensystem
- C: Benutzer
- PW: Passwort
- PW1: erstes Passwort
- PW2: zweites Passwort
- X, Y, Z: Identifikationsautomat
- D: Kommunikationswege des Bankensystems
- E: Internet

## Patentansprüche

1. Identifikationsautomat (A) für die Identifikation einer Instanz, die dem Identifikationsautomaten (A) eine Kontoverbindung übermittelt, **dadurch gekennzeichnet, dass** der Identifikationsautomat (A) ein Passwort (PW) ermittelt oder erzeugt und dieses an die in der Kontoverbindung dargestellte Adresse übermittelt.

2. Identifikationsautomat (A) nach Anspruch 1, **dadurch gekennzeichnet, dass** die Übermittlung des Passworts als Lastschrift erfolgt.

3. Identifikationsautomat (A) nach Anspruch 1, **dadurch gekennzeichnet, dass** die Übermittlung des Passworts (PW) als Gutschrift erfolgt.

4. Identifikationsautomat (A) nach einem der Ansprüche 1 bis 3, **dadurch gekennzeichnet, dass** die Übermittlung der Kontoverbindung und/oder die Übermittlung an die in der Kontoverbindung dargestellte Adresse datenverarbeitungstechnisch erfolgt.

5. Identifikationsautomat (A) nach einem der Ansprüche 1 bis 4, **dadurch gekennzeichnet, dass** die Übermittlung der Kontoverbindung an den Identifikationsautomaten (A) mit einem öffentlichen Schlüssel des Identifikationsautomaten verschlüsselt erfolgt.

6. Identifikationsautomat (A) nach einem der Ansprüche 1 bis 5, **dadurch gekennzeichnet, dass** das Passwort (PW) zur Identifikation für mindestens eine Transaktion verwendbar ist.

7. Identifikationsautomat (A) nach einem der Ansprüche 1 bis 5, **dadurch gekennzeichnet, dass** das Passwort (PW) zur Identifikation für mindestens eine durch den Identifikationsautomaten (A) geprüfte Transaktion verwendbar ist.

8. Identifikationsautomat (A) nach Anspruch 6 oder 7, **dadurch gekennzeichnet, dass** das Passwort (PW) nach einer von dem Identifikationsautomaten (A) vorgegebenen Zeit und/oder vorgegebenen Transaktionsanzahl ungültig ist.

9. Identifikationsautomat (A) nach einem der Ansprüche 1 bis 8, **dadurch gekennzeichnet, dass** das Passwort (PW) der Schlüssel für ein symmetrisches Verschlüsselungsverfahren ist.

10. Identifikationsautomat (A) nach Anspruch 9, **dadurch gekennzeichnet, dass** das Passwort (PW) der Schlüssel für ein symmetrisches Verschlüsselungsverfahren zwischen der Instanz und dem Identifikationsautomaten (A) ist.

11. Identifikationsautomat (A) nach Anspruch 9 oder 10, **dadurch gekennzeichnet, dass** der Schlüssel zur Übermittlung oder Entschlüsselung eines von der Instanz eingesetzten öffentlichen Schlüssels verwendbar ist.

12. Identifikationsautomat (A) nach Anspruch 11, **dadurch gekennzeichnet, dass** der öffentliche Schlüssel für die Kommunikation zwischen der Instanz und dem Identifikationsautomaten (A) verwendbar ist.

13. Identifikationsautomat (A) nach Anspruch 11 oder 12, **dadurch gekennzeichnet, dass** der öffentliche Schlüssel einem privaten Schlüssel der Instanz zugeordnet ist, der in einer Verschlüsselungsvorrichtung unauslesbar enthalten ist.

14. Identifikationsautomat (A) nach einem der Ansprüche 1 bis 13, **dadurch gekennzeichnet, dass** dieser einen Datenspeicher für die errechneten Passworte und die zugehörigen Bankverbindungen aufweist.

15. Identifikationsautomat (A) nach einem der Ansprüche 1 bis 14, **dadurch gekennzeichnet, dass** dieser Mittel zur Ver- und Entschlüsselung von Informationen nach symmetrischen Schlüsselverfahren aufweist.

16. Identifikationsautomat (A) nach einem der Ansprüche 1 bis 14, **dadurch gekennzeichnet, dass** dieser Mittel zur Ver- und Entschlüsselung von Informationen nach asymmetrischen Verschlüsselungsverfahren aufweist.

17. Identifikationsautomat (A) nach einem der Ansprüche 9 oder 10, **dadurch gekennzeichnet, dass** die Instanz ein Benutzer (C) ist und dass der Schlüssel zur Entschlüsselung eines von dem Benutzer (C) erzeugten und/oder Übertragung biometrischen Identifikationsmerkmals verwendbar ist.

18. Identifikationsautomat (A) nach einem der Ansprüche 1 bis 17, **dadurch gekennzeichnet, dass** die Instanz ein Benutzer (C) ist, der dem Identifikationsautomaten (A) die Kontoverbindung zusammen mit einer Telefonnummer eines von ihm verwendeten Telefons, insbesondere eines Mobiltelefons übermittelt.

19. Identifikationsverfahren zur Identifikation einer zu identifizierenden Instanz, bei dem die Instanz einer Identifikationsinstanz zumindest eine eine Kontoverbindung enthaltende Information der Instanz übermittelt, **dadurch gekennzeichnet, dass** die Identifikationsinstanz ein Passwort (PW) erzeugt oder ermittelt und an die Kontoverbindung übermittelt.

20. Identifikationsverfahren zur Identifikation einer zu identifizierenden Instanz, bei dem ein Bankensystem einer Identifikationsinstanz zumindest eine eine Kontoverbindung enthaltende Information der Instanz übermittelt, **dadurch gekennzeichnet, dass** die Identifikationsinstanz ein Passwort (PW) erzeugt oder ermittelt und an die Kontoverbindung übermittelt.

21. Identifikationsverfahren zur Identifikation einer zu identifizierenden Instanz, bei der die Instanz einer Identifikationsinstanz zumindest eine eine Kontoverbindung enthaltende Information der Instanz übermittelt, **dadurch gekennzeichnet, dass** die Instanz ein Passwort (PW) an die Identifikationsinstanz übermittelt, die dieses Passwort (PW) für die Identifikation der ersten Instanz für noch folgende Identifikationen erfasst.

22. Identifikationsverfahren nach Anspruch 19 bis 20, **dadurch gekennzeichnet, dass** die Übermittlung als Lastschrift gebucht wird.

23. Identifikationsverfahren nach Anspruch 19 bis 20, **dadurch gekennzeichnet, dass** die Übermittlung als Gutschrift gebucht wird.

24. Identifikationsverfahren nach einem der Ansprüche 19 bis 22, **dadurch gekennzeichnet, dass** die Kontoverbindung mit einem öffentlichen Schlüssel der Identifikationsinstanz verschlüsselt übertragen wird.

25. Identifikationsverfahren nach einem der Ansprüche 19 bis 24, **dadurch gekennzeichnet, dass** das Passwort (PW) zur Identifikation für mindestens eine Transaktion verwendet wird.

26. Identifikationsverfahren nach Anspruch 25, **dadurch gekennzeichnet, dass** das Passwort (PW) zur Identifikation für mindestens eine durch die Identifikationsinstanz geprüfte Transaktion verwendet wird.

27. Identifikationsverfahren nach einem der Ansprüche 19 bis 26, **dadurch gekennzeichnet, dass** das Passwort (PW) nach einer von der Identifikationsinstanz vorgegebenen Zeit und/oder Transaktionszahl ungültig wird.

28. Identifikationsverfahren nach einem der Ansprüche 19 bis 27, **dadurch gekennzeichnet, dass** das Passwort (PW) der Schlüssel für ein symmetrisches Verschlüsselungsverfahren ist.

29. Identifikationsverfahren nach Anspruch 28, **dadurch gekennzeichnet, dass** das Passwort (PW) der Schlüssel für ein symmetrisches Verschlüsselungsverfahren zwischen der Instanz und der Identifikationsinstanz ist.

30. Identifikationsverfahren nach Anspruch 28 oder 29, **dadurch gekennzeichnet, dass** der Schlüssel einen von der Instanz erzeugten öffentlichen Schlüssel entschlüsselt und/oder zertifiziert.

31. Identifikationsverfahren nach Anspruch 30, **dadurch gekennzeichnet,dass** der öffentliche Schlüssel für die Kommunikation zwischen der Instanz und der Identifikationsinstanz verwendet wird.

32. Identifikationsverfahren nach Anspruch 30 oder 31, **da-durch gekennzeichnet, dass** der öffentliche Schlüssel einem privaten Schlüssel der Instanz zugeordnet ist, der in einer Verschlüsselungsvorrichtung unauslesbar enthalten ist.

33. Identifikationsverfahren nach einem der Ansprüche 19 bis 32, **dadurch gekennzeichnet, dass** die Identifikationsinstanz Informationen mit einem symmetrischen Verschlüsselungsverfahren ver- und/oder entschlüsselt.

34. Identifikationsverfahren nach einem der Ansprüche 19 bis Anspruch 32, **dadurch gekennzeichnet, dass** die Identifikationsinstanz Informationen mit einem asymmetrischen Verschlüsselungsverfahren ver- und/oder entschlüsselt.

35. Identifikationsverfahren nach einem der Ansprüche 19 bis 34, **dadurch gekennzeichnet, dass** das Passwort (PW) an mindestens eine weitere Instanz übermittelt wird.

36. Identifikationsverfahren nach einem der Ansprüche 19 bis 35, **dadurch gekennzeichnet, dass** die die Kontoverbindung enthaltende Information mit einem ersten Passwort (PW1) übermittelt wird und die Identifikationsinstanz ein zweites Passwort (PW2) erzeugt und an die Kontoverbindung übermittelt.

37. Identifikationsverfahren nach einem der Ansprüche 19 bis 36, **dadurch gekennzeichnet, dass** die Plausibilität der die Kontoverbindung enthaltende Information geprüft wird.

38. Identifikationsverfahren nach einem der Ansprüche 19 bis 37, **dadurch gekennzeichnet, dass** die Instanz ein Benutzer (C) ist.

39. Identifikationsverfahren nach Anspruch 38, **dadurch gekennzeichnet, dass** vor der Übermittlung des ersten (PW1) und/oder zweiten Passworts (PW2) die Bonität des Benutzers (C) geprüft wird.

40. Identifikationsverfahren nach Anspruch 38 oder 39, **dadurch gekennzeichnet, dass** der Schlüssel für die Entschlüsselung und/oder Übermittlung eines von dem Benutzer (C) erzeugten biometrischen Identifikationsmerkmals verwendbar ist.

41. Identifikationsverfahren nach einem der Ansprüche 38 bis 40, **dadurch gekennzeichnet, dass** das erste (PW1) und/oder zweite Passwort (PW2) von dem Benutzer (C) abrufbar ist.

42. Identifikationsverfahren nach einem der Ansprüche 38 bis 41, **dadurch gekennzeichnet, dass** der Benutzer (C) seine Kontoverbindung zusammen mit einer Telefonnummer eines von ihm verwendeten Telefons, insbesondere eines Mobiltelefons, an die Identifikationsinstanz übermittelt und dass das an den Benutzer übermittelte Passwort (PW) eine geheime Rufnummer darstellt, die der Benutzer (C) zur Freischaltung anrufen muss.

43. Identifikationsverfahren nach einem der Ansprüche 38 bis 41, **dadurch gekennzeichnet, dass** der Benutzer (C) seine Kontoverbindung zusammen mit einer Telefonnummer eines Telefons und einem Passwort (PW) an die Identifikationsinstanz übermittelt, wobei das an die Identifikationsinstanz übermittelte Passwort (PW) die Telefonnummer des Telefons ist.

44. Identifikationsverfahren nach einem der Ansprüche 19-43, **dadurch gekennzeichnet, dass** die zu identifizierende Instanz nach dem Abrufen des Passworts (PW1) und/oder des zweiten Passworts (PW2) ein neues Passwort bestimmt.

45. Identifikationsverfahren nach Anspruch 44, **dadurch gekennzeichnet, dass** das neue Passwort das Passwort oder zweite Passwort ersetzt.
